# EUROPEAN PATENT SPECIFICATION

(11) **EP 3 049 968 B1**
(45) Date of publication and mention of the grant of the patent: **30.10.2019**
(21) Application number: 14783721.5
(22) Date of filing: 23.09.2014
(51) Int. Cl.: G06F 16/23, G06Q 10/06

(54) **MASTER SCHEMA SHARED ACROSS MULTIPLE TENANTS WITH DYNAMIC UPDATE**
HAUPTSCHEMA GETEILT ÜBER MEHRERE PARTEIEN MIT DYNAMISCHE UPDATE
SCHÉMA PRINCIPAL PARTAGÉ ENTRE PLUSIEURS PARTIES AVEC UN MISE À JOUR DYNAMIQUE

(30) Priority: 27.09.2013 US 201361883771 P; 07.02.2014 US 201414175408
(43) Date of publication of application: 03.08.2016
(73) Proprietor: Microsoft Technology Licensing, LLC, Redmond, WA 98052 (US)
(72) Inventor: KRISTOFFERSEN, Esben Nyhuus, Redmond, Washington 98052-6399 (US); FALKEBO, Jesper, Redmond, Washington 98052-6399 (US); HEJLSBERG, Thomas, Redmond, Washington 98052-6399 (US); STAIRS, John, Redmond, Washington 98052-6399 (US); SVINTH, Michael H., Redmond, Washington 98052-6399 (US)
(74) Representative: Grünecker Patent- und Rechtsanwälte PartG mbB
(86) International application number: PCT/US2014/056860
(87) International publication number: WO 2015/047969

(56) References cited:
- US-A1- 2009 049 053
- US-A1- 2012 101 998
- US-B1- 6 324 693
- US-B1- 7 343 377

## Description

### BACKGROUND

In an Enterprise Resource Planning (ERP) system with multiple tenants, an ERP application (including table schema) is defined and stored as metadata in a shared application database. The present and future tenants (online or offline) include their own databases associated with the ERP database. The tenant databases include the business data owned by that tenant with a layout defined by the shared metadata definition. A prior art tenant database system used as ERP system is disclosed by US 6 324 693 B1, published 27 November 2011.

In modern deployments, ERP systems are not static. Frequent updates are applied to ERP deployments including new functionality, features, regulatory obligations, and similar aspects. The updates result in changes to the shared schema. ERP systems with large number of tenants are challenged by inefficient schemes to propagate changes to the ERP system. Propagation of changes to all tenants result in difficulties and failures to synchronize because real time updates overload available ERP resources.

### SUMMARY

This summary is provided to introduce a selection of concepts in a simplified form that are further described below in the Detailed Description. This summary is not intended to exclusively identify key features or essential features of the claimed subject matter, nor is it intended as an aid in determining the scope of the claimed subject matter.

Embodiments are directed to efficient maintenance and upgrade of tenant databases, on demand, in a multi-tenant enterprise resource planning (ERP) system with shared schema. In some example embodiments, schema changes may be propagated from a master to any number of tenants. Support may be provided for tenants to be offline. In addition, the changes may be applied at a mount time when the tenant connects to the ERP system. Database server load may be distributed when tenants are updated with new schema changes. Application metadata (table schemas) may be detected and applied to multiple tenants at a runtime.

These and other features and advantages will be apparent from a reading of the following detailed description and a review of the associated drawings. It is to be understood that both the foregoing general description and the following detailed description are explanatory and do not restrict aspects as claimed.

The invention is defined by the appended independent claims. Preferred embodiments are defined in the dependent claims.

### BRIEF DESCRIPTION OF THE DRAWINGS

FIG. 1 is a conceptual diagram illustrating an example hosted ERP system, where a master schema may be shared across multiple tenants with dynamic update according to examples of the present invention;
FIG. 2 illustrates an example system of application database and a number of tenant databases with clients, according to examples of the present invention;
FIG. 3A and 3B illustrate how the information is used to detect schema differences in a fast and efficient scheme in a system according to examples of the present invention;
FIG. 4 is a simplified networked environment, where a system according to examples of the present invention may be implemented;
FIG. 5 is a block diagram of an example computing operating environment, where examples of the present invention may be implemented; and
FIG. 6 illustrates a logic flow diagram for a process to provide a master schema shared across multiple tenants with dynamic update according to examples of the present invention.

### DETAILED DESCRIPTION

As briefly described above, efficient maintenance and upgrade of tenant databases may be achieved in a multi-tenant ERP system with shared schema. The schema change may be propagated from a master to any number of tenants. Support may be provided for tenants to be offline. In addition, the changes may be applied at a mount time when the tenants connect to the ERP system. Database server load may be distributed when tenants are updated with new schema changes. Furthermore, application metadata (table schemas) may be detected and applied to multiple tenants at a runtime.

In the following detailed description, references are made to the accompanying drawings that form a part hereof, and in which are shown by way of illustrations specific examples of the present invention. These aspects may be combined, other aspects may be utilized, and structural changes may be made without departing from the scope of the present disclosure. The following detailed description is therefore not to be taken in a limiting sense, and the scope of the present invention is defined by the appended claims and their equivalents.

While the examples of the present invention will be described in the general context of program modules that execute in conjunction with an application program that runs on an operating system on a computing device, those skilled in the art will recognize that aspects may also be implemented in combination with other program modules.

Generally, program modules include routines, programs, components, data structures, and other types of structures that perform particular tasks or implement particular abstract data types. Moreover, those skilled in the art will appreciate that examples of the present invention may be practiced with other computer system configurations, including hand-held devices, multiprocessor systems, microprocessor-based or programmable consumer electronics, minicomputers, mainframe computers, and comparable computing devices. Examples of the present invention may also be practiced in distributed computing environments where tasks are performed by remote processing devices that are linked through a communications network. In a distributed computing environment, program modules may be located in both local and remote memory storage devices.

Examples of the present invention may be implemented as a computer-implemented process (method), a computing system, or as an article of manufacture, such as a computer program product or computer readable media. The computer program product may be a computer storage medium readable by a computer system and encoding a computer program that comprises instructions for causing a computer or computing system to perform example process(es). The computer-readable storage medium is a computer-readable memory device. The computer-readable storage medium can for example be implemented via one or more of a volatile computer memory, a non-volatile memory, a hard drive, and a flash drive.

Throughout this specification, the term "platform" may be a combination of software and hardware components to automate sharing of master schema across multiple tenants with dynamic update. Examples of platforms include, but are not limited to, a hosted service executed over a plurality of servers, an application executed on a single computing device, and comparable systems. The term "server" generally refers to a computing device executing one or more software programs typically in a networked environment. However, a server may also be implemented as a virtual server (software programs) executed on one or more computing devices viewed as a server on the network. More detail on these technologies and example embodiments may be found in the following description.

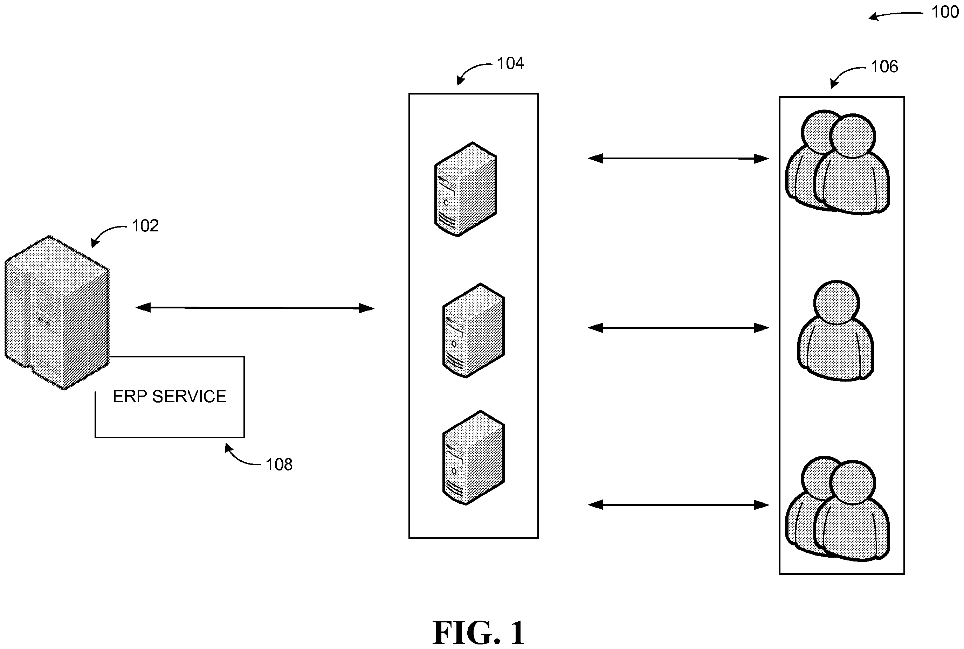

FIG. 1 is a conceptual diagram illustrating an example hosted ERP system, where a master schema may be shared across multiple tenants with dynamic update according to examples of the present invention.

In diagram 100, an ERP service 108 may be provided by a datacenter 102 that hosts applications associated with the ERP service 108. The ERP service 108 may be provided to tenants 104 by the datacenter 102 through physical servers and virtual machines executed in those servers. The tenants 104 may be referred to as customers of the ERP service 108. Tenants 104 may be attached to or detached from the datacenter 102. An attach operation may be referred to as a mount operation at a mount time. A detach operation may be referred to as a dismount operation at a dismount time. An attach operation may establish a connection between one or more of the tenants 104 with the datacenter 102. The connection may include handshake protocols, a secure pipeline established through encrypted communications, and similar connection attributes. In addition, the tenants 104 may provide applications integrating the ERP service 108 to users 106. The applications may be executed on physical servers or virtual servers executed on those physical servers.

The tenants 104 may include organizations providing the applications. In an example configuration, the ERP service 108 may be provided to the tenants 104 with varying population of users 106. For example, a subset of the tenants 104 such as small businesses may provide ERP service to a subset of the users 106 subscribing to the applications provided by the small businesses. Applications of the small businesses may integrate and provide inventory control functionality of the ERP service 108. Another subset of the tenants 104 may include large businesses. The large businesses may provide applications integrating purchase management, shipping management, inventory management, and similar functionality of the ERP service 108.

Functionality of the ERP service 108 may be provided by distinct or integrated applications or services provided by the tenants 104. The users 106 may communicate with those applications integrating the ERP service 108 through a client application. The client application may include a browser rendering functionality of the ERP service 108 provided through applications of the tenant 104. The client application may render the functionality of the ERP service 108 while hiding the applications executing on tenants 104 or the functionality of the ERP service 108 integrated into the applications.

While the example system in FIG. 1 has been described with specific components including a datacenter 102 providing the ERP service 108 and the tenants 104 executing an application integrating the functionality of the ERP service 108, examples of the present invention are not limited to these components or system configurations and can be implemented with other system configuration employing fewer or additional components.

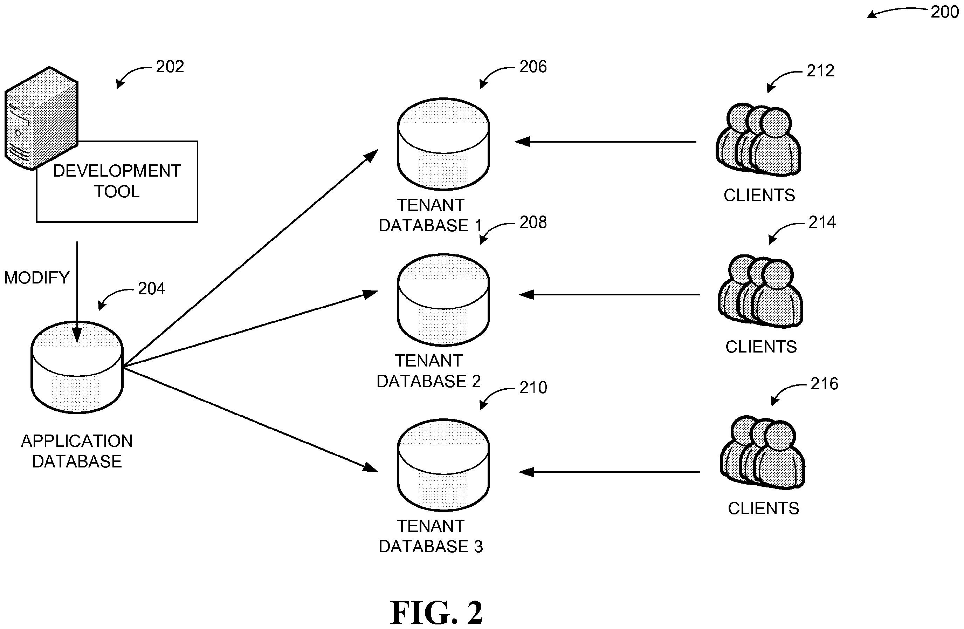

FIG. 2 illustrates an example system of application database and a number of tenant databases with clients, according to examples of the present invention.

In diagram 200 of FIG. 2, metadata for application objects (e.g., tables) may be edited in the application database 204 using a development tool 202. The application database 204 may host data for an ERP service or an ERP application. A database may be a data store hosting structure data. An example of a database may include a relational database or an object-oriented database.

According to some examples of the present invention, the development tool 202 may lack access to tenant database 1 (206), tenant database 2 (208), and tenant database 3 (210). As such, the development tool 202 may be unable to perform schema changes to tables of the tenant databases 1 (206), 2 (208), and 3 (210). In addition, the tenant databases 1 (206), 2 (208), and 3 (210) may be unavailable during an edit operation by the development tool. In an example scenario, the tenant databases 1 (206), 2 (208), and 3 (210) may be offline, may not exist, or may be attached to another datacenter providing the ERP service.

The development tool 202 may update a table of the application database 204. A checksum of the metadata of the table may be computed by the development tool 202 when updating the table. The checksum may be stored. The tenant database 1 (206), 2 (208), and 3 (210) may be connected to the application database 204 through mount operations. One or more physical servers may manage the mount operations through an update application which executes business logic, read operations, and write operations to tables of the tenant database 1 (206), 2 (208), and 3 (210).

The server(s) managing the mount operations may host the tenant database 1 (206), 2 (208), and 3 (210). Alternatively, the server(s) may be intermediaries providing connection functionality between application database 204 and the tenant databases 1 (206), 2 (208), and 3 (210). The server(s) may detect changes to objects (metadata) within the application database (204) at startup of one of the tenant databases or by monitoring changes to the checksum at a runtime. The startup or an initiation of one of the tenant databases may be referred to as a mount time. The runtime may be referred to a period in which one of the tenant databases may be available to manage data consumed by clients 212, 214, and 216.

The schema checksum for the tables in the application database 204 may be retrieved and compared to the checksums stored in the tenant databases 1 (206), 2 (208), and 3 (210). Variations between the schema checksum and the checksums of the tenant databases may be interpreted as finding a change in an object (at the application database 204, or at one of the tenant databases). Lack of variation between the schema of the tenant databases and the application database 204 may be interpreted as the tenant databases 1 (206), 2 (208), and 3 (210) having matching schemas. The server managing the tenant databases 1 (206), 2 (208), and 3 (210) may be monitoring changes in checksum of the tenant databases and the application database 204 within a predetermined period. The predetermined period may be adjustable dynamically based on settings associated with the application database 204 and the tenant databases. Alternatively, the predetermined period may be a manually adjustable period by a privileged entity such as a user or another server.

Application of the schema change in the application database 204 may be postponed to one or more of the tenant databases 1 (206), 2 (208), and 3 (210) until a subsequent request by the tenant databases 1 (206), 2 (208), and 3 (210) on the application database 204. Postponing an application of a schema change may enable distribution in time of a load associated with a schema update process that may be resource expensive and overload resources associated with the application database 204.

In diagram 200 of FIG. 2, the application database 204 and the tenant databases 1 (206), 2 (208), and 3 (210) are shown with clients 212, 214, and 216. The clients may be users consuming applications associated with the tenant databases integrating data from the application database 204, as described previously. The tenant databases 1 (206), 2 (208), and 3 (210) may be connected to the application database 204 at the mount time through a server such as an application server also referred to as an ERP service provided by an ERP server.

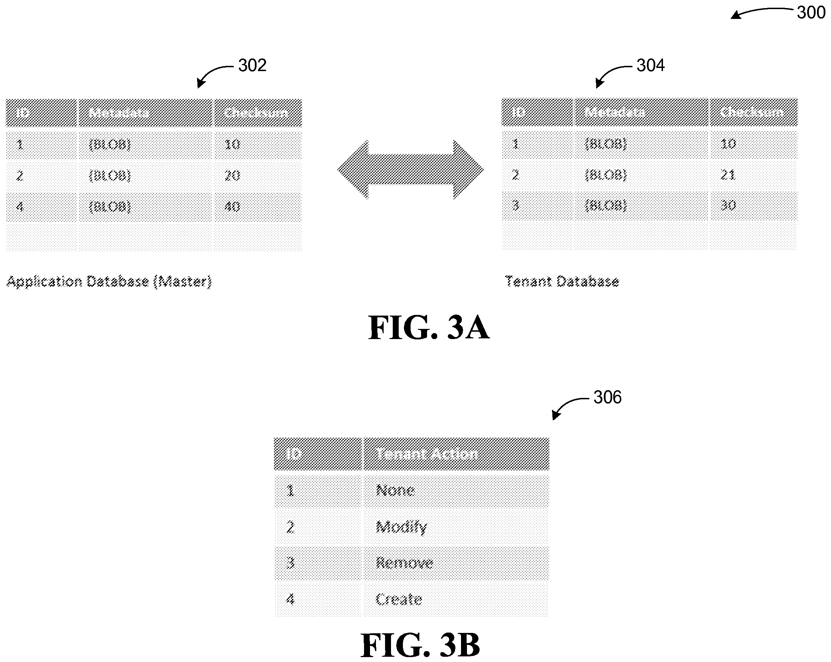

FIG. 3A and 3B illustrate how the information is used to detect schema differences in a fast and efficient scheme in a system according to examples of the present invention.

In diagram 300, the tables in FIG. 3A illustrate the information used to detect schema differences in a fast and efficient scheme. By comparing the two tables in FIG. 3A, tenant actions may be produced as shown in the table of FIG. 3B.

According to some examples of the present invention, a development environment may manage a table 302 of an application database to provide templates for tenants to build applications. The development environment may not need a connection to a table 304 of a tenant database. The development environment may be unaware the tenant database. The tenant database may be managed by an update application executing in an application server. The development environment may provide a platform for developing an application for future deployment by the tenant. In addition, the development environment may be used to make changes to the tenant through the update application. Changes applied to the table 302 of the application database by the development environment may be detected by the update application and propagated to the table 304 of the tenant database. The table 302 and the table 304 may include ID, metadata, and checksum fields. The ID field may be an identification field associated with the metadata stored in the metadata field. The metadata field may include binary large object (BLOB) data, among others. The metadata field may store schema of applications and services to be provided by the tenants to clients or users. The checksum may include integer type data to reflect a status of the metadata stored by the tables 302 and 304.

The update application may synchronize the tenant database to the application database when a tenant is attached to an ERP service during a mount time. The update application may synchronize the tenant databases to apply changes at the application database to the tenant database. A synchronize tenant command may be invoked by the update application. Alternatively, an object metadata change monitor associated with the update application may detect a change. Synchronization may be optimized by using snapshots of metadata (ID based) and by collecting a list of changes. A comparison by the update application between the checksum of the table 302 and 304 may produce a selection for an action in a table 306. The table 306 may include operations to synchronize the tenant database to the application database.

The tenant actions in table 306 may include none. A comparison of the table 302 and the table 304 may produce a "none" selection. The "none" selection may indicate no changes between the tenant database and the application database. As such, no operations may be executed by the update application to synchronize the tenant database to the application database after a comparison of the table 302 and the table 304 produces a none selection.

Alternatively, a comparison of the table 302 and the table 304 may produce a modify selection. In response to determining a modify selection, the update application may modify an object in the tenant database based on a variance between the checksum of the tenant database and the checksum of the application database. On the other hand, if the checksums are different, the metadata from the blobs may be used to detect the actual changes. Furthermore, a comparison of the table 302 and table 304 may produce a remove selection. An absence of row entry in table 302 may cause the removal of an object from the tenant database. Moreover, a comparison of the table 302 and the table 304 may produce a create selection. The update application may create an object in the tenant database in response to an entry/row in table 302 and no corresponding row/entry in table 304.

The example scenarios and schemas in FIG. 2, 3A, and 3B are shown with specific components, data types, and configurations. Examples of the present invention are not limited to systems according to these example configurations. Efficient maintenance and upgrade of tenant databases, on demand, in a multi-tenant ERP system with shared schema may be implemented in configurations employing fewer or additional components in applications and user interfaces. Furthermore, the example schema and components shown in FIG. 2, 3A, and 3B and their subcomponents may be implemented in a similar manner with other values using the principles described herein.

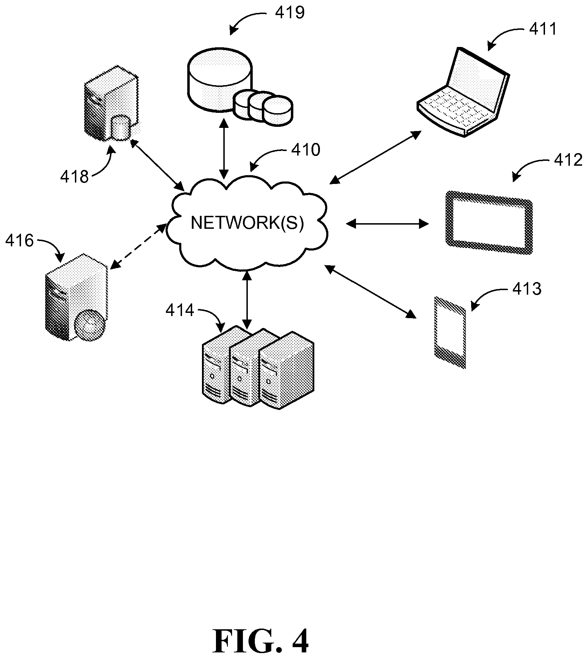

FIG. 4 is an example networked environment, where examples of the present invention may be implemented. A multi-tenant ERP system for efficient maintenance and upgrade of tenant databases when needed with shared schema may be implemented via software executed over one or more servers 414 such as a hosted service. The platform may communicate with client applications on individual computing devices such as a smart phone 413, a laptop computer 412, or desktop computer 411 ('client devices') through network(s) 410.

Client applications executed on any of the client devices 411-413 may facilitate communications via application(s) executed by servers 414, or on individual server 416. A multi-tenant ERP system may propagate schema changes from a master to tenants. Support may be provided for offline tenants. The schema changes may be applied at a mount time when the tenants connect to the ERP system. A load on a database server of the ERP system may be distributed when tenants are updated with the schema changes. The ERP system may store a record associated with the changes and metadata in data store(s) 419 directly or through database server 418.

Network(s) 410 may comprise any topology of servers, clients, Internet service providers, and communication media. A system according to examples of the present invention may have a static or dynamic topology. Network(s) 410 may include secure networks such as an enterprise network, an unsecure network such as a wireless open network, or the Internet. Network(s) 410 may also coordinate communication over other networks such as Public Switched Telephone Network (PSTN) or cellular networks. Furthermore, network(s) 410 may include short range wireless networks such as Bluetooth or similar ones. Network(s) 410 provide communication between the nodes described herein. By way of example, and not limitation, network(s) 410 may include wireless media such as acoustic, RF, infrared and other wireless media.

Many other configurations of computing devices, applications, data sources, and data distribution systems may be employed to provide maintenance and upgrade of tenant databases, on demand, in a multi-tenant ERP system with shared schema. Furthermore, the networked environments discussed in FIG. 4 are for illustration purposes only.

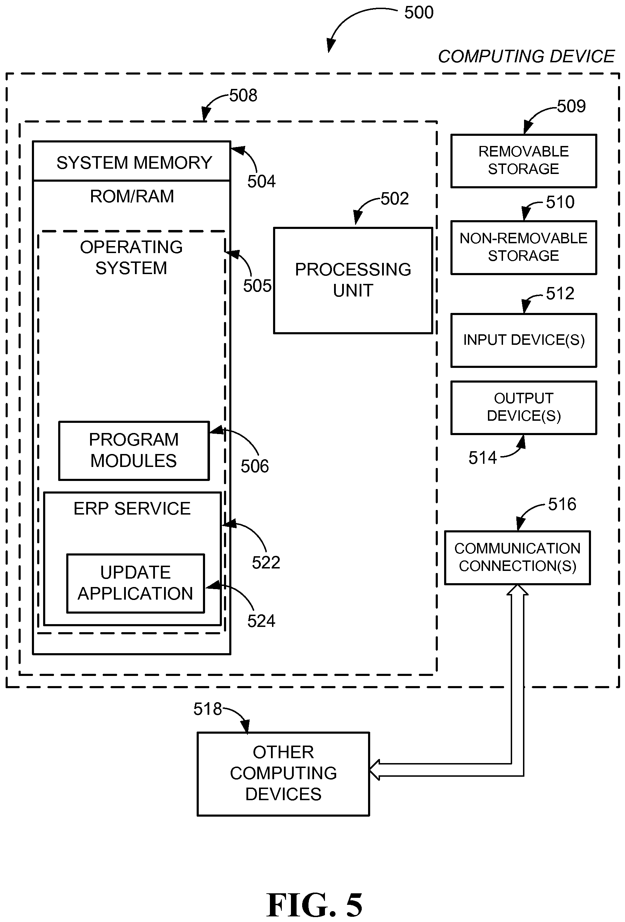

FIG. 5 and the associated discussion are intended to provide a brief, general description of a suitable computing environment in which examples of the present invention may be implemented. With reference to FIG. 5, a block diagram of an example computing operating environment for an application according to examples of the present invention is illustrated, such as computing device 500. In a basic configuration, computing device 500 may be any computing device executing one or more applications associated with a hosted ERP system according to examples of the present invention and include at least one processing unit 502 and system memory 504.

Computing device 500 may also include a plurality of processing units that cooperate in executing programs. Depending on the exact configuration and type of computing device, the system memory 504 may be volatile (such as RAM), non-volatile (such as ROM, flash memory, etc.) or some combination of the two. System memory 504 typically includes an operating system 505 suitable for controlling the operation of the platform, such as the WINDOWS ® operating systems from MICROSOFT CORPORATION of Redmond, Washington. The system memory 504 may also include one or more software applications such as program modules 506, ERP service 522, and update application 524.

The ERP service 522 may propagate schema changes from a master to tenants. The update application 524 may enable changes to the schema at a mount time when the tenants connect to the ERP service 522. This basic configuration is illustrated in FIG. 5 by those components within dashed line 508.

Computing device 500 may have additional features or functionality. For example, the computing device 500 may also include additional data storage devices (removable and/or non-removable) such as, for example, magnetic disks, optical disks, or tape. Such additional storage is illustrated in FIG. 5 by removable storage 509 and non-removable storage 510. Computer readable storage media may include volatile and nonvolatile, removable and non-removable media implemented in any method or technology for storage of information, such as computer readable instructions, data structures, program modules, or other data. System memory 504, removable storage 509 and non-removable storage 510 are all examples of computer readable storage media. Computer readable storage media includes, but is not limited to, RAM, ROM, EEPROM, flash memory or other memory technology, CD-ROM, digital versatile disks (DVD) or other optical storage, magnetic tape, magnetic disk storage or other magnetic storage devices, or any other medium which can be used to store the desired information and which can be accessed by computing device 500. Any such computer readable storage media may be part of computing device 500. Computing device 500 may also have input device(s) 512 such as keyboard, mouse, pen, voice input device, touch input device, an optical capture device for detecting gestures, and comparable input devices. Output device(s) 514 such as a display, speakers, printer, and other types of output devices may also be included. These devices are well known in the art and need not be discussed at length here.

Computing device 500 may also contain communication connections 516 that allow the device to communicate with other devices 518, such as over a wired or wireless network in a distributed computing environment, a satellite link, a cellular link, a short range network, and comparable mechanisms. Other devices 518 may include computer device(s) that execute communication applications, web servers, and comparable devices. Communication connection(s) 516 is one example of communication media. Communication media can include therein computer readable instructions, data structures, program modules, or other data. By way of example, and not limitation, communication media includes wired media such as a wired network or direct-wired connection, and wireless media such as acoustic, RF, infrared and other wireless media.

Examples of the present invention also include methods. These methods can be implemented in any number of ways, including the structures described in this document. One such way is by machine operations, of devices of the type described in this document.

Another optional way is for one or more of the individual operations of the methods to be performed in conjunction with one or more human operators performing some. These human operators need not be collocated with each other, but each can be only with a machine that performs a portion of the program.

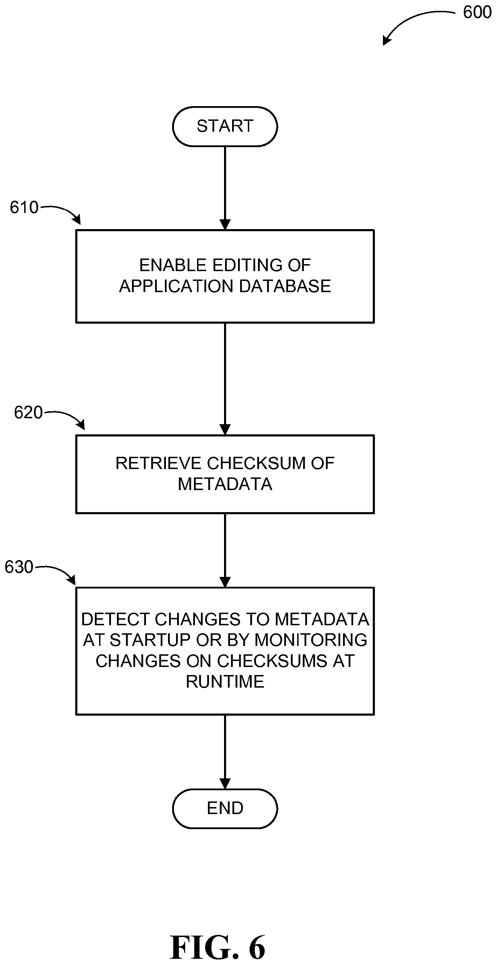

FIG. 6 illustrates a logic flow diagram for a process of efficient maintenance and upgrade of tenant databases, on demand, in a multi-tenant ERP system with shared schema according to examples of the present invention. Process 600 may be implemented on a hosted ERP system.

Process 600 begins with operation 610, where a development tool may be enabled to edit metadata at an application database. At this stage, the development tool may be unaware of the tenant databases. At operation 620, a checksum of the metadata may be retrieved by an update application associated with the ERP system. The checksum may be computed and stored by a development tool when updating a metadata/definition of a table at the application database. At operation 630, the update application executing on a server that attaches the tenant databases to the application database at a mount time may detect changes to objects (metadata) of the application database either at startup or by monitoring to changes to the checksums at a runtime.

The operations included in process 600 are for illustration purposes. An ERP system according to examples of the present invention may be implemented by similar processes with fewer or additional steps, as well as in different order of operations using the principles described herein.

The above specification, examples and data provide a complete description of the manufacture and use of the composition of the examples of the present invention. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims and embodiments. The scope of the invention is defined by the appended claims.

## Claims

1. A method executed on a computing device to maintain and upgrade a tenant database (206, 208, 210) in a multi-tenant Enterprise Resource Planning, ERP, system with a shared schema, the method comprising:
enabling editing of an application database (204) through a development tool (202);
retrieving a checksum of metadata in the application database; and
propagating changes from the application database to the tenant database by enabling a detection of a change at a mount time at the tenant database through a comparison of the checksum to another checksum at the tenant database, wherein a variation between the checksums is interpreted as detecting a change, and
wherein the changes include variations between a schema of the application database and another schema of the tenant database.

2. The method of claim 1, further comprising:
producing a modify selection as a result of the comparison.

3. The method of claim 2, further comprising:
modifying an object of the tenant database based on a variance between the checksum and the other checksum to synchronize the tenant database to the application database.

4. The method of claim 1, further comprising:
producing a remove selection as a result of the comparison.

5. The method of claim 4, further comprising:
removing an object of the tenant database based on a variance between the checksum and the other checksum to synchronize the tenant database to the application database.

6. The method of claim 1, further comprising:
producing a create selection as a result of the comparison.

7. The method of claim 6, further comprising:
creating an object in the tenant database based on a variance between the checksum and the other checksum to synchronize the tenant database to the application database.

8. A server to maintain and upgrade a tenant database (206, 208, 210) in a multi-tenant Enterprise Resource Planning, ERP, system with a shared schema, the server comprising:
a memory;
a processor coupled to the memory, the processor executing an update application in conjunction with instructions stored in the memory, wherein the update application is configured to:
enable editing of an application database (204) through a development tool (202);
retrieve a checksum of metadata in the application database; and
propagate changes from the application database to the tenant database by enabling detection of a change at one or more of:
a mount time at the tenant database through a comparison of the checksum to another checksum at the tenant database, and
a runtime through monitoring of the changes in the checksum within a predetermined period;
wherein a variation between the checksums is interpreted as detecting a change, and
wherein the changes include variations between a schema of the application database and another schema of the tenant database.

9. The server of claim 8, wherein the update application is further configured to:
postpone an application of the changes to a subsequent request by a client connected to the tenant database on the application database to distribute a load of an update process associated with the application of the changes, in time.

10. The server of claim 8, wherein the update application is further configured to:
execute a business logic, a read operation, a write operation associated with the tenant database at the mount time.

11. A computer-readable memory device with instructions stored thereon to maintain and upgrade a tenant database (206, 208, 210) in a multi-tenant Enterprise Resource Planning, (ERP), system with a shared schema, the instructions comprising:
enabling editing of an application database (204) through a development tool (202);
retrieving a checksum of metadata in the application database; and
propagating changes from the application database to the tenant database by enabling detection of a change at one or more of:
a mount time at the tenant database through a comparison of the checksum to another checksum at the tenant database, and
a runtime through monitoring of changes in the checksum within a predetermined period; wherein a variation between the checksums is interpreted as detecting a change, and wherein the changes include variations between a schema of the application database and another schema of the tenant database.

12. The computer-readable memory device of claim 11, wherein the instructions further comprise:
producing a modify selection as a result of the comparison; and
modifying an object of the tenant database based on a variance between the checksum and the other checksum to synchronize the tenant database to the application database.

13. The computer-readable memory device of claim 12, wherein the instructions further comprise:
producing a remove selection as a result of the comparison; and
removing an object of the tenant database based on a variance between the checksum and the other checksum to synchronize the tenant database to the application database.

## Patentansprüche

1. Auf einem Computergerät ausgeführtes Verfahren zum Verwalten und Aktualisieren einer Parteiendatenbank (206, 208, 210) in einem mehrparteilichen Enterprise-Ressource-Planning-, ERP-, System mit einem gemeinsam genutzten Schema, wobei das Verfahren umfasst:
Ermöglichen des Editierens einer Anwendungsdatenbank (204) durch ein Entwicklungswerkzeug (202);
Abrufen einer Prüfsumme von Metadaten in der Anwendungsdatenbank; und
Weitergeben von Änderungen von der Anwendungsdatenbank an die Parteiendatenbank durch Ermöglichen einer Erkennung einer Änderung zu einem Bereitstellungszeitpunkt in der Parteiendatenbank durch einen Vergleich der Prüfsumme mit einer anderen Prüfsumme in der Parteiendatenbank, wobei eine Abweichung zwischen den Prüfsummen als Erfassen einer Änderung interpretiert wird, und
die Änderungen Abweichungen zwischen einem Schema der Anwendungsdatenbank und einem anderen Schema der Parteiendatenbank umfassen.

2. Verfahren nach Anspruch 1, weiterhin umfassend:
Erzeugen einer Änderungsauswahl als Ergebnis des Vergleichs.

3. Verfahren nach Anspruch 2, weiterhin umfassend:
Ändern eines Objekts der Parteiendatenbank basierend auf einer Varianz zwischen der Prüfsumme und der anderen Prüfsumme, um die Parteiendatenbank mit der Anwendungsdatenbank zu synchronisieren.

4. Verfahren nach Anspruch 1, weiterhin umfassend:
Erzeugen einer Entfernauswahl als Ergebnis des Vergleichs.

5. Verfahren nach Anspruch 4, weiterhin umfassend:
Entfernen eines Objekts der Parteiendatenbank basierend auf einer Varianz zwischen der Prüfsumme und der anderen Prüfsumme, um die Parteiendatenbank mit der Anwendungsdatenbank zu synchronisieren.

6. Verfahren nach Anspruch 1, weiterhin umfassend:
Erstellen einer Erzeugungsauswahl als Ergebnis des Vergleichs.

7. Verfahren nach Anspruch 6, weiterhin umfassend:
Erstellen eines Objekts in der Parteiendatenbank basierend auf einer Varianz zwischen der Prüfsumme und der anderen Prüfsumme, um die Parteiendatenbank mit der Anwendungsdatenbank zu synchronisieren.

8. Server zum Verwalten und Aktualisieren einer Parteiendatenbank (206, 208, 210) in einem mehrparteilichen Enterprise-Ressource-Planning-, ERP-, System mit einem gemeinsam genutzten Schema, wobei der Server umfasst:
einen Speicher;
einen mit dem Speicher gekoppelten Prozessor, wobei der Prozessor eine Aktualisierungsanwendung in Verbindung mit in dem Speicher gespeicherten Anweisungen ausführt, wobei die Aktualisierungsanwendung eingerichtet ist für das:
Ermöglichen des Editierens einer Anwendungsdatenbank (204) über ein Entwicklungswerkzeug (202);
Abrufen einer Prüfsumme von Metadaten in der Anwendungsdatenbank; und
Weitergeben von Änderungen aus der Anwendungsdatenbank in die Parteiendatenbank, indem die Erkennung einer Änderung an einem oder mehreren der folgenden Punkte aktiviert wird:
einer Bereitstellungszeit in der Parteiendatenbank durch einen Vergleich der Prüfsumme mit einer anderen Prüfsumme in der Parteiendatenbank, und
einer Laufzeit durch Überwachen der Änderungen der Prüfsumme innerhalb eines vorgegebenen Zeitraums;
wobei eine Abweichung zwischen den Prüfsummen als Erkennen einer Änderung interpretiert wird und die Änderungen Abweichungen zwischen einem Schema der Anwendungsdatenbank und einem anderen Schema der Parteiendatenbank umfassen.

9. Server nach Anspruch 8, bei dem die Aktualisierungsanwendung weiterhin dazu eingerichtet ist:
eine Anwendung der Änderungen auf eine nachfolgende Anforderung durch einen mit der Parteiendatenbank verbundenen Client in der Anwendungsdatenbank zu verschieben, um eine Last eines Aktualisierungsprozesses, der mit der Anwendung der Änderungen zusammenhängt, rechtzeitig zu verteilen.

10. Server nach Anspruch 8, bei dem die Aktualisierungsanwendung weiterhin dazu eingerichtet ist:
eine Geschäftslogik, eine Leseoperation und eine Schreiboperation auszuführen, die der Parteiendatenbank zum Zeitpunkt des Ladens zugeordnet sind.

11. Computerlesbares Speichergerät mit darauf gespeicherten Anweisungen zum Verwalten und Aktualisieren einer Parteiendatenbank (206, 208, 210) in einem mehrparteilichen Enterprise-Ressource-Planning-, ERP-, System mit einem gemeinsam genutzten Schema, wobei die Anweisungen umfassen:
Ermöglichen des Editierens einer Anwendungsdatenbank (204) über ein Entwicklungswerkzeug (202);
Abrufen einer Prüfsumme von Metadaten in der Anwendungsdatenbank; und
Weitergeben von Änderungen aus der Anwendungsdatenbank in die Parteiendatenbank, indem die Erkennung einer Änderung an einem oder mehreren der folgenden Punkte aktiviert wird:
einer Bereitstellungszeit in der Parteiendatenbank durch einen Vergleich der Prüfsumme mit einer anderen Prüfsumme in der Parteiendatenbank und
einer Laufzeit durch Überwachen von Änderungen in der Prüfsumme innerhalb eines vorgegebenen Zeitraums;
wobei eine Abweichung zwischen den Prüfsummen als Erkennen einer Änderung interpretiert wird und die Änderungen Abweichungen zwischen einem Schema der Anwendungsdatenbank und einem anderen Schema der Parteiendatenbank umfassen.

12. Computerlesbare Speichervorrichtung nach Anspruch 11, bei der die Anweisungen weiterhin umfassen:
Erzeugen einer Änderungsauswahl als Ergebnis des Vergleichs; und
Ändern eines Objekts der Parteiendatenbank basierend auf einer Varianz zwischen der Prüfsumme und der anderen Prüfsumme, um die Parteiendatenbank mit der Anwendungsdatenbank zu synchronisieren.

13. Computerlesbare Speichervorrichtung nach Anspruch 12, bei der die Anweisungen weiterhin umfassen:
Erzeugen einer Entfernauswahl als Ergebnis des Vergleichs; und
Entfernen eines Objekts der Parteiendatenbank basierend auf einer Varianz zwischen der Prüfsumme und der anderen Prüfsumme, um die Parteiendatenbank mit der Anwendungsdatenbank zu synchronisieren.

## Revendications

1. Procédé exécuté sur un dispositif informatique pour maintenir et mettre à niveau une base de données de locataires (206, 208, 210) dans un système de Planification des ressources d'entreprise, ERP, à plusieurs locataires avec un schéma partagé, le procédé comprenant les opérations suivantes:
permettre l'édition d'une base de données d'application (204) à l'aide d'un outil de développement (202);
récupérer une somme de contrôle des métadonnées dans la base de données d'application; et
propager les changements de la base de données d'application à la base de données de locataires en permettant la détection d'un changement à un moment donné dans la base de données de locataires par une comparaison de la somme de contrôle à une autre somme de contrôle dans la base de données de locataires, où un écart entre les sommes de contrôle est interprétée comme la détection d'un changement, et
dans laquelle les modifications comprennent des écarts entre un schéma de la base de données d'application et un autre schéma de la base de données de locataires.

2. Procédé selon la revendication 1, comprenant en outre:
la production d'une sélection de modification à la suite de la comparaison.

3. Procédé selon la revendication 2, comprenant en outre:
la modification d'un objet de la base de données de locataires en fonction d'un écart entre la somme de contrôle et l'autre somme de contrôle pour synchroniser la base de données de locataires avec la base de données d'application.

4. Procédé selon la revendication 1, comprenant en outre:
la production d'une sélection de suppression à la suite de la comparaison.

5. Procédé selon la revendication 4, comprenant en outre:
la suppression d'un objet de la base de données de locataires en fonction d'un écart entre la somme de contrôle et l'autre somme de contrôle pour synchroniser la base de données de locataires avec la base de données d'application.

6. Procédé selon la revendication 1, comprenant en outre:
la production d'une sélection de création à la suite de la comparaison.

7. Procédé selon la revendication 6, comprenant en outre:
la création d'un objet de la base de données de locataires en fonction d'un écart entre la somme de contrôle et l'autre somme de contrôle pour synchroniser la base de données de locataires avec la base de données d'application.

8. Serveur pour maintenir et mettre à niveau une base de données de locataires (206, 208, 210) dans un système de Planification des ressources d'entreprise, ERP, à plusieurs locataires avec un schéma partagé, le serveur comprenant: une mémoire;
un processeur couplé à la mémoire, le processeur exécutant une application de mise à jour conjointement avec des instructions stockées dans la mémoire, dans lequel l'application de mise à jour est configurée pour:
permettre l'édition d'une base de données d'application (204) à l'aide d'un outil de développement (202);
récupérer une somme de contrôle des métadonnées dans la base de données d'application; et
propager les changements de la base de données d'application vers la base de données de locataires en permettant la détection d'un changement à un ou plusieurs des éléments suivants:
un temps de montage dans la base de données de locataires grâce à une comparaison de la somme de contrôle avec une autre somme de contrôle dans la base de données de locataires, et
une durée d'exécution par le suivi des changements dans la somme de contrôle au cours d'une période prédéterminée;
dans laquelle une variation entre les sommes de contrôle est interprétée comme la détection d'un changement, et
dans laquelle les modifications comprennent des écarts entre un schéma de la base de données d'application et un autre schéma de la base de données de locataires.

9. Serveur selon la revendication 8, dans lequel le processeur d'application est en outre configuré pour:
reporter l'application des modifications à une demande ultérieure d'un client connecté à la base de données de locataires dans la base de données d'application pour distribuer à temps une charge d'un processus de mise à jour associé à l'application des modifications.

10. Serveur selon la revendication 8, dans lequel l'application de mise à jour est en outre configurée pour:
exécuter une logique de gestion, une opération de lecture, une opération d'écriture associée à la base de données de locataires au moment du montage.

11. Dispositif mémoire lisible par ordinateur sur lequel sont stockées des instructions stockées, pour maintenir et mettre à niveau une base de données de locataires (206, 208, 210) dans un système de Planification des ressources d'entreprise, ERP, à plusieurs locataires avec un schéma partagé, les instructions comprenant les opérations suivantes:
permettre l'édition d'une base de données d'application (204) à l'aide d'un outil de développement (202);
récupérer une somme de contrôle des métadonnées dans la base de données d'application; et
propager les changements de la base de données d'application vers la base de données de locataires en permettant la détection d'un changement à un ou plusieurs des éléments suivants:
un temps de montage dans la base de données de locataires grâce à une comparaison de la somme de contrôle avec une autre somme de contrôle dans la base de données de locataires, et
une durée d'exécution par le suivi des changements dans la somme de contrôle au cours d'une période prédéterminée; dans laquelle un écart entre les sommes de contrôle est interprété comme la détection d'un changement, et
dans laquelle les modifications comprennent des écarts entre un schéma de la base de données d'application et un autre schéma de la base de données de locataires.

12. Dispositif mémoire lisible par ordinateur selon la revendication 11, dans lequel les instructions comprennent en outre les opérations suivantes:
la production d'une sélection de modification à la suite de la comparaison; et
la modification d'un objet de la base de données de locataires en fonction d'un écart entre la somme de contrôle et l'autre somme de contrôle pour synchroniser la base de données de locataires avec la base de données d'application.

13. Dispositif mémoire lisible par ordinateur selon la revendication 12, dans lequel les instructions comprennent en outre les opérations suivantes:
la production d'une sélection de suppression à la suite de la comparaison; et
la suppression d'un objet de la base de données de locataires en fonction d'un écart entre la somme de contrôle et l'autre somme de contrôle pour synchroniser la base de données de locataires avec la base de données d'application.
